# EUROPÄISCHE PATENTSCHRIFT

(11) **EP 3 493 971 B1**
(45) Veröffentlichungstag und Bekanntmachung des Hinweises auf die Patenterteilung: **24.02.2021**
(21) Anmeldenummer: 17745985.6
(22) Anmeldetag: 27.07.2017
(51) Int. Cl.: B29C 49/42, B29C 49/64, B65B 61/24, B29C 71/02

(54) **VERFAHREN UND VORRICHTUNG ZUR WEITEREN FORMGEBUNG UND/ODER FORMSTABILISIERUNG VON BEREITS BEFÜLLTEN UND DICHT VERSCHLOSSENEN BEHÄLTERN AUS KUNSTSTOFF**
METHOD AND DEVICE FOR FURTHER SHAPING AND/OR DIMENSIONALLY STABILISING ALREADY FILLED AND SEALED PLASTIC CONTAINERS
PROCÉDÉ ET DISPOSITIF POUR LA MISE EN FORME ULTÉRIEURE ET/OU LA STABILISATION DE FORME DE RÉCIPIENTS EN MATIÈRE PLASTIQUE DÉJÀ REMPLIS ET FERMÉS DE MANIÈRE ÉTANCHE

(30) Priorität: 06.08.2016 DE 102016009595
(43) Veröffentlichungstag der Anmeldung: 12.06.2019
(73) Patentinhaber: Kocher-Plastik Maschinenbau GmbH, 74429 Sulzbach-Laufen (DE)
(72) Erfinder: GESER, Johannes, 70839 Gerlingen (DE); GROH, Martin, 74405 Gaildorf (DE); HAMMER, Alexander, 74405 Gaildorf (DE); SCHRECKENHÖFER, Manfred, 74429 Sulzbach-Laufen (DE); SPALLEK, Michael, 55218 Ingelheim (DE)
(74) Vertreter: Bartels und Partner, Patentanwälte
(86) Internationale Anmeldenummer: PCT/EP2017/000910
(87) Internationale Veröffentlichungsnummer: WO 2018/028814

(56) Entgegenhaltungen:
- EP-B1- 2 331 315
- WO-A1-2010/021532
- US-A- 2 964 889
- US-A- 4 485 134
- US-A- 5 277 874
- US-A1- 2004 211 746
- US-A1- 2009 120 530
- DATABASE WPI Week 199014 Thomson Scientific, London, GB; AN 1990-104970 XP002774541, -& JP H02 57319 A (TOYODA GOSEI KK) 27. Februar 1990 (1990-02-27)
- DATABASE WPI Week 201174 Thomson Scientific, London, GB; AN 2011-N78935 XP002775569, -& JP 2011 225253 A (RICOH ELEMEX KK) 10. November 2011 (2011-11-10)

## Beschreibung

Die Erfindung betrifft ein Verfahren und eine Vorrichtung zur weiteren Formstabilisierung und Formgebung von Flächen und/oder Kanten bereits befüllter und dicht verschlossener Behälter, insbesondere für befüllte und verschlossene Behälter aus Kunststoffmaterial, die nach dem Blasform-, Füll- und Schließverfahren hergestellt sind, durch Überdruck im Inneren des Behälters während einer Wärmebehandlung.

Behälter, die aus Kunststoff nach dem Blow-Fill-Seal-Verfahren (BFS), das auch als bottelpack®-Verfahren bekannt ist, hergestellt sind, finden insbesondere für medizinische Zwecke weit verbreitete Anwendung, beispielsweise in Form von Infusionsflaschen. Für medizinische Anwendungen sind solche Behälter deshalb besonders geeignet, weil das Füllgut ausschließlich zu einem Polymer Kontakt hat, so dass diese Behälter, selbst bei längeren Lagerzeiten unter ungünstigen Umgebungsbedingungen, eine hohe Sicherheit gegen mikrobielle Verschmutzungen bieten. Durch das BFS-Verfahren ist es möglich, ausgehend von Polymergranulat und dem Füllgut innerhalb von weniger als 20 Sekunden befüllte und dicht verschlossene Flaschen herzustellen.

Für derartige Behälter werden typischerweise Polyolefine wie zum Beispiel Polyethylen, Polypropylen und deren Blends und/oder Copolymere als Materialien eingesetzt. Auch sind Behälter aus mehreren Polymerschichten einsetzbar wie zum Beispiel in der DE 103 47 908 A1 beschrieben.

Im Gegensatz zur Herstellung von Behältern nach dem Spritzgussverfahren sind die Gestaltungsmöglichkeiten beim Blasformen, also auch beim BFS Verfahren, wesentlich eingeschränkter. Dies wird in WO 2015/007703 A1 ausführlich dargestellt. So sind beispielsweise Behälter mit scharfen Kanten, ausgeprägten Faltlinien oder exakt planen Flächen mit dem Blasformverfahren - auch wegen der kurzen zur Formgebung zur Verfügung stehenden Zeit - nur schwierig oder nur mit geringer Präzision herstellbar. Dies spielt typischerweise bei Behältern mit einem zylindrischen Querschnitt eine eher untergeordnete Rolle, jedoch wird dies wichtig, wenn mit einer präzisen Flaschenform funktionale Anforderungen erfüllt werden müssen. Insbesondere bei speziell geformten Behältern, beispielsweise mit vorgegebenen Knickstellen/Faltstellen, die bei - ohne Behälterbelüftung erfolgenden - Entnahmevorgängen des Füllguts das Kollabieren des Behälters begünstigen, sind präzise ausgeformte Faltkanten unbedingt notwendig. Als nachveröffentlichten Stand der Technik zeigt beispielsweise die Patentanmeldung DE 10 2016 002 467 der Schutzrechtsinhaberin einen Behälter, dessen Behälterwand spezielle Gestaltsmittel aufweist, die bei Füllgutabgabe ohne Belüftung ein leichtes Kollabieren des Behälters und dadurch ein erwünschtes vollständiges Auslaufen von Füllgut ohne Behälterbelüftung aus dem Behälter ermöglichen.

Weitere Verfahren zur Formgebung von Kunststoffteilen gehen aus der JP H02-057319, der US 2 964 889, der US 5 277 874, der US 2009/0120530 A1, der EP 2 331 315 B1, der US 2004/0211746 A1, der US 4 485 134, der WO 2010/021532 A1 und der JP 2011-225253 hervor.

Im Hinblick auf diese Problematik stellt sich die Erfindung die Aufgabe, ein Verfahren nebst Vorrichtung zur Verfügung zu stellen, die eine präzise Formung/Nachformung mit präziseren Kantenverlauf bereits befüllter und dicht verschlossener Behälter ermöglicht, ohne das Füllgut negativ zu beeinflussen und ohne, dass es dabei zu Undichtigkeiten kommt.

Erfindungsgemäß ist diese Aufgabe durch ein Verfahren sowie eine Vorrichtung gelöst, das die Merkmale des Patentanspruchs 1 bzw. des Patentanspruchs 5 in seiner Gesamtheit aufweist.

Die Erfindung sieht demgemäß ein Verfahren zur weiteren Formgebung und Formstabilisierung von bereits befüllten und verschlossenen Behältern vor mit zumindest den folgenden Schritten:
- Einbringen des jeweiligen Behälters in eine Aufnahmevorrichtung, deren Stegwände zumindest teilweise eine Kontur vorgeben, an die der Behälter im Rahmen einer Wärmebehandlung erwärmt und durch den derart im Behälterinneren erzeugten Überdruck sich in formgebender Weise anpasst und/oder in formstabilisierender Weise anlegt;
- Durchführen einer plastischen Material-Umformung aufgrund des Überdruckes im Behälterinneren, bei der ein zunächst gerundeter Faltlinienverlauf für eine Faltlinie des Behälters, die sich aus der vorangegangenen Behälterherstellung nach dem Blasform-, Füll- und Schließverfahren ergibt, in eine schärfere Kante durch Anpressen mit abstandsfreiem Anlegen gegen das Wandmaterial der Stegwände der Aufnahmevorrichtung übergeht; und
- Ausbringen des jeweiligen Behälters aus der Aufnahmevorrichtung nach abgeschlossener Formgebung und Formstabilisierung.

Durch eine kontinuierliche Erwärmung, vorzugsweise in einem Autoklaven durchgeführt, bis zum Erreichen eines maximalen Temperaturniveaus kommt es gleichzeitig zu einer kontinuierlichen Ausdehnung des Füllgutes sowie zur kontinuierlichen Erhöhung des Dampfdruckes des dahingehenden Füllguts im Behälter. Dabei kommt es auch zu einer kontinuierlichen Druckerhöhung im Gasraum innerhalb des Behälters, über dem Füllgut, was insgesamt zu einer kontinuierlichen Erhöhung des Innendrucks im Behälter führt. Der Innendruck bzw. seine Erhöhung wird genutzt, um im Sinne einer Formgebung und/oder Formstabilisierung auf die jeweilige Behälterwand des Behälters von innen her einzuwirken.

Die angesprochene Formgebung hat dabei den Charakter einer Umformung für die jeweils angesprochene Behälterwand des Behälters und die zur Umformung notwendige Formgebungs- oder Umformkraft wird, wie bereits dargelegt, im Wesentlichen durch den im Behälterinneren während des Umformprozesses erzeugten, temperaturabhängigen Überdruck aufgebracht. Neben dem bereits angesprochenen Autoklaven kann der Formgebungs- oder Umformprozess im einfachsten Fall auch in einem Wärmeschrank erfolgen und dauert typischerweise einige Minuten. Durch den erfindungsgemäß bewirkten langsamen Druckanstieg können Beschädigungen des befüllten Behälters oder gar Undichtigkeiten verhindert werden. Dergestalt kommt es auch zu einer Formstabilisierung in den Behälterwänden.

Um zwar einen gewünschten langsamen Druckanstieg jedoch ein höheres Druck- und Temperaturniveau und damit eine Reduktion der Umformzeiten - insbesondere bei wässrigen Füllgütern - zu erreichen, ist der Einsatz des bereits genannten Autoklaven vorteilhaft. Hierdurch ist es möglich, Temperaturen nahe dem Schmelzpunkt der BFS-Behältermaterialien zu realisieren.

Diese liegen bei Polyethylen niedriger Dichte (LDPE oder LLDPE) typischerweise im Bereich von 106 bis 118 °C und bei Polypropylen (PP) im Bereich von 118 bis 135 °C. Bei wässrigen Füllgütern stellt sich bei diesen Temperaturen ein Dampfdruck von ca. 1,25 bis 1,86 bar bzw. ca. 1,86 bis 3,13 bar ein. Eine weitere Druckerhöhung wird verursacht durch die temperaturbedingte Ausdehnung des Gasraumes im Behälter und des flüssigen Füllgutes. Somit stehen bei Temperaturen zwischen 105 °C und 140 °C zur Formgebung Behälterinnendrücke bis ca. 4 bar zur Verfügung. Optional kann die effektiv wirkende formgebende Kraft zumindest teilweise durch geregeltes Aufbringen eines stützenden Gegendrucks, dem sogenannten Stützdruck, im Autoklaven reduziert werden. Die Umformung ist typischerweise - je nach Schmelzpunkt des Polymers, Temperatur, Innen- und Stützdruck - innerhalb weniger Minuten abgeschlossen.

Hierfür kommen typischerweise Heißwasserberieselungsautoklaven zum Einsatz, wie sie beispielsweise von der Firma Bosch als Typ SWS entwickelt wurden, oder Autoklaven mit Dampf-/Luftgemischverfahren zum Einsatz, wie sie von der Firma Bosch als Typ SDR entwickelt wurden und jeweils auf dem Markt frei erhältlich sind. Von diesen Autoklaven wird für die nach dem oben genannten BFS-Verfahren hergestellten und dicht verschlossenen Behälter bevorzugt das Heißwasserberieselungsverfahren benutzt. Besondere zusätzliche wirtschaftliche Vorteile ergeben sich, wenn die Dauer der Wärmeumformungsbehandlung über die zur eigentlichen Wärmeumformung benötigte Dauer hinaus verlängert wird. Insbesondere können Autoklavierbedingungen gewählt werden, die auch zur signifikanten Reduktion der Keimzahl - d.h. zu einer mindestens 1000-fachen Abreicherung von Keimen -, zur Stabilisierung der Formulierung des Füllgutes (beispielsweise notwendig zum Vermeiden von Ausfällungen bei hochkonzentrierten Lösungen oder bei schwerlöslichen Inhaltsstoffen) und/oder zur Sterilisation für pharmazeutische und/oder medizinische Zwecke angewendet werden.

Hierfür werden bevorzugt gemäß dem europäischen Arzneibuch standardisierte Bedingungen von beispielsweise 121 °C über eine Zeitdauer von 20 Minuten für Behälter aus Polypropylen oder Polyethylen höherer Dichte (HDPE) verwendet. Für Behälter aus Polyethylen niedriger Dichte (LDPE) liegen unter mikrobiologischen Aspekten bevorzugte Wärmebehandlungsbedingungen bei ca. 110-113 °C /80 Minuten oder 106-109 °C/ 90 Minuten.

Auch solche recht langen Wärmebehandlungsbedingungen sind vorteilhaft für die erfindungsgemäße weitere Formgebung/Formstabilisierung der befüllten und verschlossenen Behälter.

Das erfindungsgemäße Verfahren zur Formgebung oder Umformung von bereits befüllten und dicht verschlossenen und insoweit fertig hergestellten Behältern aus Kunststoffmaterial ist also dadurch charakterisiert, dass die Behälter in einem Wärmebehandlungsprozess erwärmt werden und durch den im Behälterinneren erzeugten Überdruck an formgebende Wände der Behälter-Aufnahmevorrichtung mit entsprechend vorgebbarer Kontur angepresst werden. Dergestalt wird auch die Formstabilisierung für die Behälter durchgeführt mit der Folge, dass die einmal vorgegebene Behälterform auch im Rahmen des Wärme-Nachbehandlungsverfahrens beibehalten wird. Dies hat so keine Entsprechung im Stand der Technik. Auch hat es sich gezeigt, dass es bei der angesprochenen Wärmebehandlung zu einer signifikanten Reduktion der Keimzahl kommt, so dass sogar eine Sterilisation des Behälterinhalts erreichbar ist.

Gemäß der Merkmalsausgestaltung des Patentanspruchs 5 ist erfindungsgemäß eine Vorrichtung bestehend aus einem Autoklaven und einer weiteren Vorrichtung zur Bildung einer Aufnahme für die Behälter aus Kunststoffmaterial vorgesehen, die in dem genannten Wärmeschrank oder Autoklaven eine Wärmebehandlung erfahren. Die Vorrichtung dient dem Durchführen des erfindungsgemäßen Verfahrens und weist ein im Wärmeschrank oder Autoklaven herausnehmbar anordenbares, korbartiges Traggestell auf, in dem eine Vielzahl von Behältern aufnehmbar ist, die in Reihen aufeinanderfolgend angeordnet sind und in dem für jeden Behälter ein Aufnahmeraum dadurch definiert ist, dass entlang der Reihen der Behälter abstützende Wände, insbesondere in Form von Stegwänden, verlaufen, die in Anpassung an die gewünschte Form der an ihnen benachbart angeordneten Seitenwände der Behälter eine vorgebbare Kontur aufweisen, wobei die angesprochene Kontur von dem tatsächlichen Seitenwandverlauf der Behälter zunächst abweichen kann. Die Vorrichtung ist dadurch gekennzeichnet, dass die Stegwände einen Verlauf in Form einer Zick-Zack-Linie mit zwischen den Richtungswechseln der Linie jeweils geradlinigen, im Winkel zur Richtung der Reihen verlaufenden Längenabschnitten aufweisen oder dass zwei benachbarte Stegwände einen Winkel von größer 90° Grad miteinander einschließen.

Durch einen nicht geradlinigen Verlauf der Stegwände mit an die Form der an ihnen anliegenden Seitenwände der Behälter angepasster Verlaufsform, schmiegen sich die nicht ebenflächig verlaufenden Seitenwände der Behälter an die ebenflächig verlaufenden Stegwände passend an. Dies verhindert zum einen irreversible Ausbeulungen dieser Seitenwände des Behälters, zum anderen werden sie überdies durch formschlüssige Anlage, insbesondere während des Autoklavierprozesses ebenflächig geformt. In analoger Weise lassen sich beispielsweise Behälterkanten spitzwinkliger ausformen. Hierzu weisen die Stegwände spitzere Kantenwinkel auf, als der Behälter vor der erfindungsgemäßen Umformung respektive Formgebung.

Die Stegwände weisen eine Verlaufsform mit sich abwechselnden, zur einen Seite oder zur anderen Seite hin erfolgenden Richtungswechseln auf. Dadurch lässt sich an den Stegwänden an einem Richtungswechsel, der zwischen zwei benachbarten Richtungswechseln gelegen ist, jeweils ein Aufnahmeraum ausbilden.

Bei besonders vorteilhaften Ausführungsbeispielen, bei denen die Aufnahmeräume bei jeweils benachbarten Behälterreihen zueinander derart versetzt sind, dass zu den Behälterreihen senkrecht verlaufende Behälterspalten gebildet sind, die zwischen jeweils zwei benachbarten Behältern der Behälterreihen verlaufen, lassen sich die Behälter mit besonders hoher Passungsdichte und Packungsdichte im Traggestell anordnen.

Dabei kann die Anordnung mit Vorteil so getroffen sein, dass für Behälter, deren Abmessung in Richtung der Behälterreihen oder der Behälterspalten größer als in der dazu senkrechten Richtung ist, die den Abstand zwischen benachbarten Stegwänden verringernden spitzen Richtungswechsel und die diesen Abstand vergrößernden spitzen Richtungswechsel bilden, jeweils miteinander fluchten. Dadurch bilden die Aufnahmeräume im Traggestell ein wabenähnliches, regelmäßiges Anordnungsmuster.

Für Behälter, die an den Seiten ihrer größeren Abmessung jeweils ein vorspringendes Wandteil mit dreieckförmigem, einen Konuswinkel einschließenden Querschnitt besitzen, können die Stegwände an den Abstand zwischen ihnen vergrößernden Richtungswechseln in einem dem Konuswinkel angepassten Winkel zueinander abgewinkelt sein. Dadurch ergibt sich für Behälter, die eine spezielle Konfiguration zur Begünstigung des Kollabierens bei Füllgutentnahme aufweisen, also für Behälter, wie sie bei der einen nachveröffentlichten Stand der Technik zeigenden Patentanmeldung DE 10 2016 002 467 offenbart sind, eine formgebende Halterung, so dass sogar der Konuswinkel gemäß der Geometrie der Stegwände veränderbar ist.

Vorteilhaft wird die erfindungsgemäße Vorrichtung auch zur sicheren Erhaltung der ursprünglichen Form (Formstabilisierung) von Behältern eingesetzt, wenn Behälter - zum Beispiel zur Stabilisierung einer pharmazeutischen Formulierung - wärmebehandelt werden und sich durch in der Praxis unvermeidliche Temperaturgradienten im Autoklaven unerwünschte, irreversible Ausbeulungen ergeben können.

Vorzugsweise sind die Stegwände aus einem rostfreien Stahlblech gebildet, wobei sich die Stegwände vorteilhafterweise von einem die Auflage der Behälter bildenden Tragrost des Traggestells in einer Höhe erstrecken können, die zumindest der Höhe des Hauptteils der Behälter entspricht, so dass über die Höhe des Behälterhauptteils eine formende bzw. formstabilisierende Anlage erreicht ist.

Zur Bildung eines Traggestells in der Art eines Korbes können die Enden der Stegwände an jeder Seite des Tragrostes durch eine ebene Abschlusswand verbunden sein.

Nachstehend ist die Erfindung anhand eines in der Zeichnung dargestellten Ausführungsbeispiels im Einzelnen erläutert. Es zeigen:
- Fig. 1: eine perspektivische Schrägansicht eines nach dem BFS-Verfahren hergestellten Behälters aus Kunststoff;
- Fig. 2: eine perspektivische Schrägansicht eines Ausführungsbeispieles der erfindungsgemäßen Vorrichtung, gesehen auf die Oberseite des mit Behältern bestückten Traggestells;
- Fig. 3: eine gegenüber Fig. 2 vergrößert gezeichnete Teildraufsicht eines Teilbereiches des Ausführungsbeispieles mit vier eingesetzten Behältern; und
- Fig. 4 und 5: eine vergrößert gezeichnete Draufsicht eines Kantenbereiches des in Fig. 1 gezeigten BFS-Behälters in der erfindungsgemäßen Vorrichtung vor (Fig. 4) und nach (Fig. 5) dem erfindungsgemäßen Umformungsprozess.

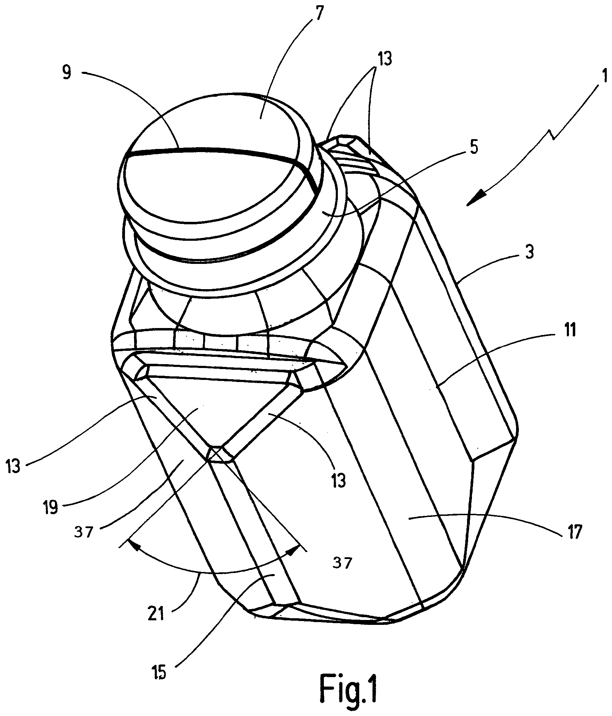

Unter Bezugnahme auf die beigefügten Zeichnungen ist die Erfindung am Beispiel einer Vorrichtung erläutert, die für das Autoklavieren von nach dem BFS-Verfahren hergestellten Kunststoffbehältern vorgesehen ist, deren Behälterwand eine spezielle Gestaltung besitzt. Die Fig. 1 zeigt einen Behälter 1 mit einer von einer üblichen rotationssymmetrischen Kontur abweichenden Gestalt des Behälterhauptteiles 3, der das Füllgut aufnimmt. An das obere Ende des Hauptteils 3 schließt sich ein kreisrundes Kopfteil 5 an, dessen oberer Abschluss durch eine leicht nach außen gewölbte Membran 7 gebildet ist. Diese dient bei der Anwendung als Entnahmebereich, der mittels einer Kanüle, Injektionsnadel oder einem Infusionsgerät durchstechbar ist. Dabei wirkt die sich über die Membran 7 erstreckende Formtrennlinie 9, die bei dem Vorgang des Entformens des im BFS-Verfahrens hergestellten Behälters 1 aus der Blasform gebildet wird, als Verstärkung der Membran 7 gegen ein Einstülpen beim Durchstechen.

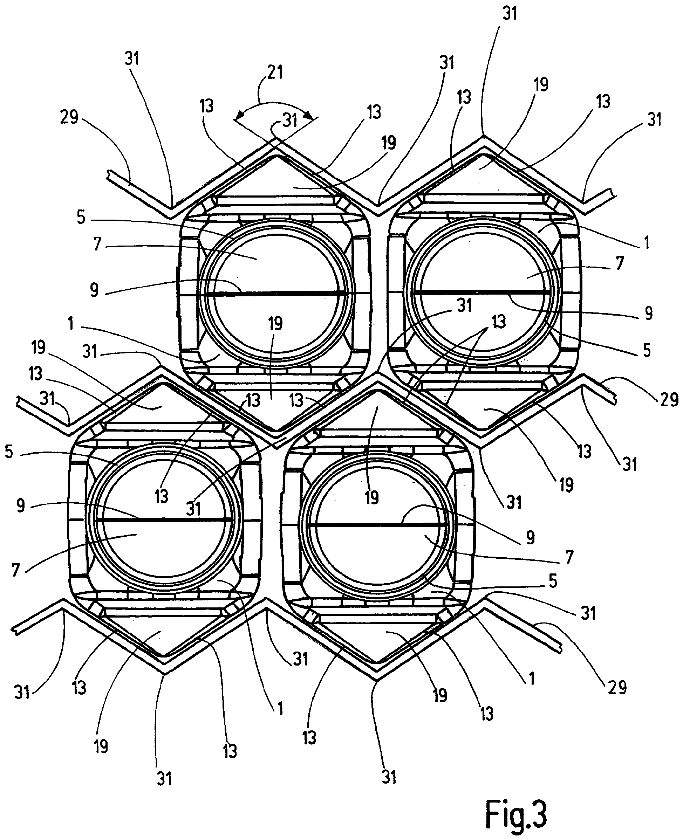

Wie in der bereits erwähnten, nachveröffentlichten Patentanmeldung für diesen Behälter 1 gezeigt, sind am Behälterhauptteil 3 zwischen im Winkel zueinander verlaufenden Wandteilen jeweils Verbindungsstellen oder Faltlinien 11, 13, 15, 17 gebildet, wobei an zwei einander gegenüberliegenden Seiten des Behälterhauptteiles 3 je ein vorspringendes Wandteil mit den Faltlinien 13 und 15 gebildet ist. Diese vorspringenden Wandteile bilden an Ober- und Unterseite eine von den Faltlinien 13 begrenzte Schulterfläche 19. Die die Schulterfläche 19 begrenzenden Faltlinien 13 schließen miteinander einen Konuswinkel 21 (siehe Fig. 3) von 110° ein. Diese Gestaltsmittel der Behälterwand ermöglichen bei einem ohne Behälterbelüftung unter Schwerkrafteinfluss erfolgendem Entnahmevorgang die weitgehende Volumenreduzierung durch Kollabieren des Behälters 1 und dadurch das vollständige, gewünschte Auslaufen des Behälterinhalts.

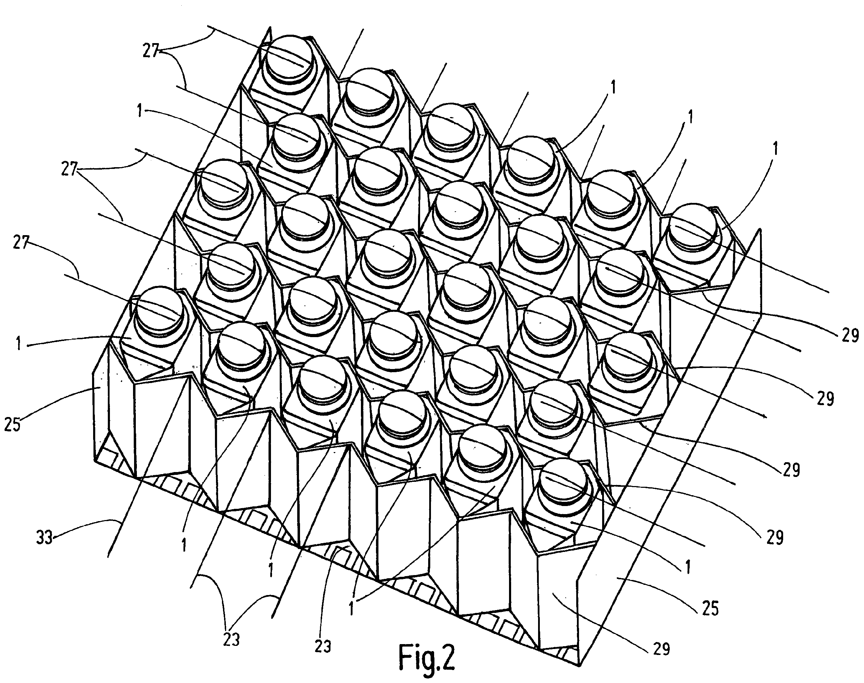

Die Erfindung weist als Träger für die wärmezubehandelnden, gefüllten und verschlossenen Behälter 1 ein als Einschub in einen Autoklaven einbringbares Traggestell auf, das, wie Fig. 2 zeigt, einen ebenen, gitterartigen Tragrost 23 mit rechteckförmigem Umriss aufweist und aus einem rostfreien Stahlwerkstoff hergestellt ist. An gegenüberliegenden Schmalseiten des Tragrostes 23 sind in senkrechter Ebene zu diesem nach oben verlaufende, ebene Abschlusswände 25 vorgesehen. Für die Anordnung der Behälter 1 in Behälterreihen 27, die geradlinig von Abschlusswand 25 zu Abschlusswand 25 und zu diesen in senkrechter Richtung verlaufen, sind Stegwände 29 vorgesehen, die, wie die Abschlusswände 25, aus rostfreiem Stahlblech gebildet sind und sich, in gleicher Höhe wie die Abschlusswände 25, zwischen diesen durchgehend erstrecken. Die in gleichen Abständen voneinander entlang der Behälterreihen 27 verlaufenden Stegwände 29 bilden zwischen sich die Aufnahmeräume für die aufeinanderfolgenden Behälter 1, die in Fig. 2 nicht sämtlich beziffert sind, der Behälterreihen 27.

Zur Bildung der Aufnahmeräume, wie sie in Fig. 3 für vier Behälter 1 in vergrößerter Darstellung verdeutlicht sind, weisen die Stegwände 29 zur Anpassung an die Außenform der jeweils zugewandten Seitenwand der Behälter 1, beim gezeigten Beispiel an die die dreieckförmige Schulterfläche 19 aufweisenden Seitenwände, eine zick-zack-förmige Verlaufsform auf, siehe insbesondere Fig. 3. Wie gezeigt, weist die Zick-Zack-Form zwischen aufeinanderfolgenden Richtungswechselstellen 31 jeweils geradlinige Längenabschnitte auf, die an den Richtungswechselstellen 31 jeweils zu einer Seite und zur anderen Seite hin abwechselnd abgewinkelt sind und die jeweils die gleiche Länge besitzen. Dabei schließen die geradlinigen Längenabschnitte an den Richtungswechselstellen 31 jeweils einen Winkel ein, der dem Konuswinkel 21 der Schulterfläche 19 der Behälter 1 entspricht. Die Stegwände 29 definieren bei dieser Formgebung jeweils einen Aufnahmeraum, an dem sie sich an die der dreieckförmigen Schulterfläche 19 entsprechende Außenform jedes Behälters 1 anschmiegen, siehe Fig. 3.

Wie ebenfalls Fig. 3 zeigt, sind bei der Zick-Zack-Form der Stegwände 29 die Behälter 1 bei aufeinanderfolgenden Behälterreihen 27 derart zueinander versetzt, dass zu den Behälterreihen 27 senkrecht verlaufende Behälterspalten 33 (siehe Fig. 2) gebildet sind, die zwischen jeweils zwei aufeinanderfolgenden Behältern 1 jeder Behälterreihe 27 verlaufen. Bei dieser Formgebung bilden die Stegwände 29 daher Aufnahmeräume in die Fläche des Tagrostes 23 optimal ausnützender Packungsdichte.

Wie die Fig. 2 zeigt, entsprechen die Höhe der Abschlusswände 25 und der Stegwände 29 jeweils der Höhe des Behälterhauptteiles 3 der Behälter 1, so dass die die Aufnahmeräume zwischen sich bildenden Stegwände 29 über die gesamte Höhe der zugewandten Seitenwände der Behälter 1 an diesen formstabilisierend bzw. formgebend anliegen und der Autoklavierprozess daher durchführbar ist, ohne dass die spezielle Behälterform mit den Faltlinien 11, 13, 15 und 17, die das Kollabieren beim Entnahmevorgang begünstigen, nachteilig beeinträchtigt wird. Da der vom Traggestell gebildete Korb an der Oberseite offen ist, kann die Vorrichtung schnell und bequem mit den Behältern 1 bestückt und nach der Autoklavierung für eine neue Charge der Behälter 1 freigemacht werden.

Erfindungsgemäß besonders vorteilhaft kommt es durch die beschriebene Vorrichtung während des Autoklavierprozesses zu einer Vereinheitlichung zumindest eines Teils der Behältergeometrie (beispielsweise der Faltlinien 15), in dem auch gegebenenfalls unpräzis geformte Kanten oder unerwünscht unebene Flächen - dies lässt sich in Großserienproduktion nicht immer vollständig verhindern - in bzw. an die starren Stegwände 29 ein- bzw. angepresst und somit umgeformt oder in ihrer bereits vorhandenen Form stabilisiert werden.

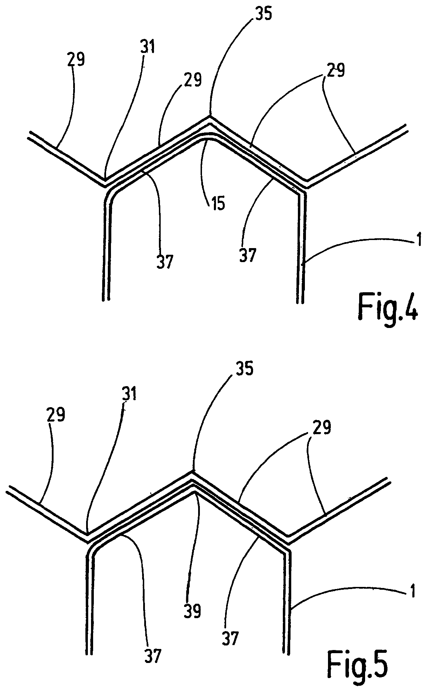

Um Vorstehendes zu verdeutlichen, wird auf die Zeichnungsinhalte nach den Fig. 4 und 5 verwiesen. Diese zeigen teilweise die zick-zack-förmig verlaufende Stegwand 29 der Aufnahmevorrichtung mit den bereits beschriebenen Richtungswechseln 31. In den sich hieraus ergebenden Aufnahmeraum ist exemplarisch ein Behälter 1 eingesetzt, wie er in der Fig. 1 wiedergegeben ist. Die Darstellungen nach den Fig. 4 und 5 sind Draufsichten auf die dahingehende Aufnahmeanordnung und der Behälter 1 ist nur von seiner einen freien Stirnseite her gezeigt. Zwei einander benachbart angeordnete Stegwände 29 bilden einen senkrecht auf der Blattebene stehenden Kantenverlauf 35 aus, wobei die beiden benachbarten Stegwände 29 einen Winkel von > 90° miteinander einschließen, beispielsweise von 110° bis 120°. An die Innenseite der Stegwände 29 schließen sich die beiden benachbarten Stirnwände 37 des Behälters 1 an, die über die mittlere Verbindungsstelle 15 miteinander verbunden sind. Wie sich aus den Darstellungen nach den Fig. 1 und 4 ergibt, ist die dahingehende Verbindungsstelle 15 als Faltlinie in gerundeter Form ausgebildet. Die dahingehend gerundete Form für die Faltlinie 15 ergibt sich aus der vorangegangenen Behälterherstellung nach dem Blasform-, Füll- und Schließverfahren, bei dem ein Behältererzeugnis, wie in der Fig. 1 dargestellt, erhalten wird. Sofern der Behälter 1 in der Fig. 1 über gerundete Verbindungs- oder Übergangsstellen sowie Faltlinien, wie beispielsweise die Faltlinie 15, verfügt, ist dies herstellbedingt und insoweit zwingend vorgegeben.

Mit dem erfindungsgemäßen Verfahren nebst Vorrichtung ist es nun möglich, solchen gerundeten Übergängen, wie der Faltlinie 15, eine schärfere Kantenform zu verleihen, wie dies beispielhaft in der Fig. 5 dargestellt ist, wobei sich gezeigt hat, dass solche schärferen Kantenverläufe vorteilhaft sein können, sofern man Behälter 1 erhalten möchte, die sich mit ihren Behälterwänden aneinanderlegend vollständig entleeren lassen, was sich auch im Rahmen der späteren Entsorgung als günstig erweist, bei der solche Behälter 1 dann im entleerten Zustand in dichter Packung platzsparend entsorgt werden können.

Um den schärferen Kantenverlauf für die Behältergeometrie nach der Fig. 5 zu erreichen, wird der Behälter 1, wie vorstehend beschrieben, einer lang andauernden Wärmebehandlung bei relativ niedrigen Temperaturen in einem Wärmeschrank oder vorzugsweise höheren Temperaturen in einem Autoklaven unterzogen. Im Rahmen dieser Wärmebehandlung entsteht im Behälterinneren - wie vorstehend dargelegt - ein ausreichender Überdruck, um eine plastische Material-Umformung zu erreichen, bei dem die Behälteraußenkontur von der Form nach der Fig. 4 in die Form nach der Fig. 5 gebracht wird, d.h. der zunächst gerundete Faltlinienverlauf für die Faltlinie 15 geht in eine schärfere Kante 39 nach der Fig. 5 über. Es wird also aufgrund des Überdrucks im Behälterinneren die Wandkontur des Behälters 1 an die Kontur der Stegwände 29 in diesem Kantenbereich angepasst, indem das Wandmaterial des Behälters 1 gegen das Wandmaterial der Stegwände 29 gepresst respektive abstandsfrei angelegt wird. Beim anschließenden Abkühlprozess für den Behälter 1 behält dieser dann seine Form nach der Fig. 5 permanent bei und aufgrund von nicht näher dargestellten oder beschriebenen Umlagerungsprozessen im Kunststoffmaterial wird die Form der Behälter-Wandgeometrie entsprechend stabilisiert. Neben dem angesprochenen schärferen Kantenverlauf 39 können natürlich auch andere Konturen auf diese Art und Weise für den Behälter 1 nachträglich, also nach dessen Herstellung erzeugt werden und gegebenenfalls vorhandene unerwünschte Geometrien des befüllten und verschlossenen Behälters 1 lassen sich in formstabilisierender Weise durch Umformung verändern.

## Patentansprüche

1. Verfahren zur weiteren Formgebung und Formstabilisierung von bereits befüllten und verschlossenen Behältern (1), die nach einem Blasform-, Füll- und Schließverfahren hergestellt werden **gekennzeichnet durch** zumindest den folgenden Schritten:
- Einbringen des jeweiligen Behälters (1) in eine Aufnahmevorrichtung, deren Stegwände (29) zumindest teilweise eine Kontur vorgeben, an die der Behälter (1) im Rahmen einer Wärmebehandlung erwärmt und durch den derart im Behälterinneren erzeugten Überdruck sich in formgebender Weise anpasst und in formstabilisierender Weise anlegt;
- Durchführen einer plastischen Material-Umformung aufgrund des Überdruckes im Behälterinneren, bei der ein zunächst gerundeter Faltlinienverlauf für eine Faltlinie (15) des Behälters, die sich aus der vorangegangenen Behälterherstellung nach dem Blasform-, Füll- und Schließverfahren ergibt, in eine schärfere Kante (39) durch Anpressen mit abstandsfreiem Anlegen gegen das Wandmaterial der Stegwände (29) der Aufnahmevorrichtung übergeht; und
- Ausbringen des jeweiligen Behälters (1) aus der Aufnahmevorrichtung nach abgeschlossener Formgebung und Formstabilisierung.

2. Verfahren nach Anspruch 1, **dadurch gekennzeichnet, dass** die Wärmebehandlung in einem Autoklaven durchgeführt wird.

3. Verfahren nach Anspruch 2, **dadurch gekennzeichnet, dass** die Wärmebehandlung im Autoklaven bei Temperaturen zwischen 105 °C und 140 °C, bevorzugt zwischen 118 °C und 125 °C, durchgeführt wird.

4. Verfahren nach einem der vorstehenden Ansprüche, **dadurch gekennzeichnet, dass** die Dauer der Wärmebehandlung zwischen 5 Minuten und 120 Minuten, bevorzugt zwischen 10 Minuten und 90 Minuten, beträgt.

5. Vorrichtung bestehend aus einem Autoklaven und einer weiteren Vorrichtung zur Bildung einer Aufnahme für Behälter (1) aus Kunststoffmaterial, die in dem Autoklaven eine Wärmebehandlung erfahren, insbesondere zum Durchführen eines Verfahrens nach einem der vorhergehenden Ansprüche, mit einem im Autoklaven herausnehmbar anordenbaren, korbartigen Traggestell (23, 25), in dem eine Vielzahl von Behältern (1) aufnehmbar ist, die in Reihen (27) aufeinanderfolgend angeordnet sind und in dem für jeden Behälter (1) ein Aufnahmeraum dadurch definiert ist, dass entlang der Reihen (27) der Behälter (1) abstützende, stegartige Wände (29) verlaufen, die in Anpassung an die gewünschte Form der an ihnen benachbart angeordneten Seitenwände (19) der Behälter (1) eine vorgebbare Kontur aufweisen, **dadurch gekennzeichnet, dass** die Stegwände (29) einen Verlauf in Form einer Zick-Zack-Linie mit zwischen den Richtungswechseln (31) der Linie jeweils geradlinigen, im Winkel zur Richtung der Reihen (27) verlaufenden Längenabschnitten aufweisen oder dass zwei benachbarte Stegwände (29) einen Winkel von größer 90° Grad miteinander einschließen.

6. Vorrichtung nach Anspruch 5, **dadurch gekennzeichnet, dass** die Behälter (1) in geradlinigen Reihen (27) aufeinanderfolgend angeordnet sind und dass die die Behälter (1) abstützenden, stegartigen Wände (29) eine gegenüber dem geradlinigen Verlauf der jeweiligen Reihe (27) abweichende Verlaufsform besitzen.

7. Vorrichtung nach einem der Ansprüche 5 bis 6, **dadurch gekennzeichnet, dass** die Aufnahmeräume bei jeweils benachbarten Behälterreihen (27) zueinander derart versetzt sind, dass zu den Behälterreihen (27) senkrecht verlaufende Behälterspalten (33) gebildet sind, die zwischen jeweils zwei benachbarten Behältern (1) der Behälterreihen (27) verlaufen.

8. Vorrichtung nach Anspruch 7, **dadurch gekennzeichnet, dass** für Behälter (1), deren Abmessung in Richtung der Behälterreihen (27) oder der Behälterspalten (33) größer als in der dazu senkrechten Richtung ist, die den Abstand zwischen benachbarten, stegartigen Wänden (29) verringernden spitzen Richtungswechsel (31) und die diesen Abstand vergrößernden spitzen Richtungswechsel (31) jeweils miteinander fluchten.

9. Vorrichtung nach einem der Ansprüche 5 bis 8, **dadurch gekennzeichnet, dass** für Behälter (1), die an den Seiten ihrer größeren Abmessung jeweils ein vorspringendes Wandteil (19) mit dreieckförmigem, einen Konuswinkel (21) einschließenden Querschnitt besitzen, die stegartigen Wände (29) an den den Abstand zwischen ihnen vergrößernden Richtungswechseln (31) in einem dem Konuswinkel (21) angepassten Winkel zueinander abgewinkelt sind.

10. Vorrichtung nach einem der Ansprüche 5 bis 9, **dadurch gekennzeichnet, dass** die stegartigen Wände (29) aus einem rostfreien Stahlblech gebildet sind.

11. Vorrichtung nach einem der Ansprüche 5 bis 10, **dadurch gekennzeichnet, dass** sich die stegartigen Wände (29) von einem die Auflage der Behälter (1) bildenden Tragrost (23) des Traggestells in einer Höhe erstrecken, die zumindest der Höhe des Hauptteils (3) der Behälter (1) entspricht.

12. Vorrichtung nach Anspruch 11, **dadurch gekennzeichnet, dass** die Enden der stegartigen Wände (29) an jeder Seite des Tragrostes (23) durch eine ebene Abschlusswand (25) verbunden sind.

13. Vorrichtung nach einem der Ansprüche 5 bis 12, **dadurch gekennzeichnet, dass** Paare von benachbarten, stegartigen Wänden (29) einen Kantenverlauf (35) ausbilden, dem Paare von benachbarten Stirnwänden (37) des jeweiligen Behälters (1) an ihrer jeweiligen Verbindungsstelle (15) in formgebender Weise nachfolgen und/oder sich entlang des Kantenverlaufs (35) mit ihrer jeweils vorgegebenen Form stabilisieren.

## Claims

1. Method for further forming and form stabilisation of pre-filled and sealed containers (1) which are manufactured using the blow moulding, filling and sealing method, **characterised by** at least the following steps:
- placing the respective container (1) into a receiving device, the web walls (29) of which at least partially define a contour, on which the container (1) warms up during a heat treatment, adapting in a forming manner and applying in a form-stabilising manner due to the excess pressure thus generated inside the container;
- carrying out a plastic material deformation due to the excess pressure inside the container, during which an initially rounded fold line path for a fold line (15) of the container, which arises from the preceding container manufacturing step using the blow moulding, filling and sealing method, transitions into a sharper edge (39) by pressing the web walls (29) of the receiving device and applying without any space between them; and
- removing the respective container (1) from the receiving device on completion of forming and form stabilisation.

2. Method according to claim 1, **characterised in that** the heat treatment is carried out in an autoclave.

3. Method according to claim 2, **characterised in that** the heat treatment is carried out in the autoclave at temperatures of between 105°C and 140°C, preferably between 118°C and 125°C.

4. Method according to any one of the preceding claims, **characterised in that** the heat treatment lasts for between 5 minutes and 120 minutes, preferably between 10 and 90 minutes.

5. Device consisting of an autoclave and a further device for forming a receptacle for containers (1) made from plastics material, which undergo heat treatment in the autoclave, in particular to perform a method according to any one of the preceding claims, with a basket-like support frame (23, 25) which can be removably arranged in the autoclave, a plurality of containers (1) being able to be received in said support frame, said containers being arranged consecutively in rows (27) and in which a receiving space is defined for each container (1) by supporting, web-like walls (29) running along the rows (27) of containers (1), said walls comprising a predefinable contour that adapts to the desired form of the side walls (19) of the containers (1) arranged adjacent to said web-like walls, **characterised in that** the web walls (29) follow a path in the form of a zigzag line with rectilinear longitudinal portions running at an angle to the direction of the rows (27) between the changes of direction (31) of the line or **in that** two adjacent web walls (29) enclose an angle in excess of 90° (degrees) between each other.

6. Device according to claim 5, **characterised in that** the containers (1) are arranged consecutively in rectilinear rows (27) and **in that** the web-like walls (29) supporting the containers (1) follow a path which is different to the rectilinear path of the respective row (27).

7. Device according to any one of claims 5 to 6, **characterised in that** the receiving spaces in the respective adjacent container rows (27) are offset with respect to one another such as to form columns of containers (33) running perpendicular to the container rows (27), said columns running between each two adjacent containers (1) of the container rows (27).

8. Device according to claim 7, **characterised in that**, for containers (1) with a dimension in the direction of the container rows (27) or the container columns (33) which is larger than in the direction perpendicular thereto, the acute changes of direction (31) which reduce the space between adjacent, web-like walls (29) and the acute changes of direction (31) enlarging this space are in each case aligned with one another.

9. Device according to any one of claims 5 to 8, **characterised in that**, for containers (1), which, on the sides with their larger dimension, each have a protruding wall portion (19) with a triangular cross-section enclosing a cone angle (21), the web-like walls (29) at the changes of direction (31) enlarging the space between them are angled with respect to one another with an angle adjusted to the cone angle (21).

10. Device according to any one of claims 5 to 9, **characterised in that** the web-like walls (29) are formed from a stainless steel plate.

11. Device according to any one of claims 5 to 10, **characterised in that** the web-like walls (29) extend from a support grid (23) of the support frame, said grid forming the base of the container (1), over a height that at least corresponds to the height of the main part (3) of the container (1).

12. Device according to claim 11, **characterised in that** the ends of the web-like walls (29) on each side of the support grid (23) are connected by a flat end wall (25).

13. Device according to any one of claims 5 to 12, **characterised in that** pairs of adjacent, web-like walls (29) form an edge path (35) followed by pairs of adjacent end walls (37) of the respective container (1) at their respective connection point (15) in a forming manner and/or said pairs of end walls are stabilised along the edge path (35) with their respective pre-defined form.

## Revendications

1. Procédé pour continuer à donner la forme et à stabiliser la forme de récipients (1) déjà remplis et fermés, qui ont été fabriqués suivant un procédé de moulage par soufflage, de remplissage et de fermeture,
**caractérisé par** au moins les stades suivants :
- on introduit le récipient (1) respectif dans un système de logement, dont les parois (29) d'entretoisement prescrivent, au moins en partie, un contour sur lequel le récipient (1) est chauffé dans le cadre d'un traitement par la chaleur et par la surpression produite ainsi à l'intérieur du récipient, s'adapte d'une façon donnant la forme et s'applique d'une façon stabilisant la forme:
- on effectue, sur la base de la surpression à l'intérieur du récipient, une déformation plastique de matériau, dans laquelle une courbe d'abord arrondie d'une ligne (15) de pliage du récipient, qui provient de la fabrication précédente du récipient par le procédé de moulage par soufflage, de remplissage et de fermeture, se transforme en une arête (39) plus vive par pression avec application sans distance sur le matériau des parois (29) d'entretoisement du système de logement ; et
- on retire le récipient (1) respectif du système de logement après avoir fini de donner la forme et de la stabiliser.

2. Procédé suivant la revendication 1, **caractérisé en ce qu'**on effectue le traitement par la chaleur dans un autoclave.

3. Procédé suivant la revendication 2, **caractérisé en ce que** l'on effectue le traitement à la chaleur dans l'autoclave à des températures comprises entre 105°C et 140°C, de préférence entre 118°C et 125°C.

4. Procédé suivant l'une des revendications précédentes, **caractérisé en ce que** la durée du traitement par la chaleur est comprise entre 5 minutes et 120 minutes, de préférence entre 10 minutes et 90 minutes.

5. Installation constituée d'un autoclave et d'une autre installation de formation d'un logement pour des récipients (1) en matière plastique, qui subissent un traitement par la chaleur dans l'autoclave, notamment pour effectuer un procédé suivant l'une des revendications précédentes, comprenant un cadre (23, 25) porteur, de type en panier, qui peut être mis dans l'autoclave avec possibilité d'en être retiré, dans lequel peut être logée une pluralité de récipients (1) qui sont disposés successivement en rangées (27) et dans lequel il est défini pour chaque récipient (1) un espace de logement par le fait que des parois (29) de type à entretoise s'étendent en en appui le long des rangées (27) des récipients (1) et ont un contour pouvant être prescrit en adaptation avec la forme souhaitée des parois (19) latérales, disposées en leur voisinage, des récipients (1), **caractérisée en ce que** les parois (29) d'entretoisement ont un tracé sous la forme d'une ligne en zigzag, ayant des segments de longueur respectivement en ligne droite entre les changements (31) de direction et s'étendant en faisant un angle avec la direction des rangées (27) ou **en ce que** deux parois (29) d'entretoisement voisines font entre elles un angle plus grand que 90°.

6. Installation suivant la revendication 5, **caractérisée en ce que** les récipients (1) sont disposés successivement en rangées (27) en ligne droite et **en ce que** les parois (29) de type à entretoisement venant à l'appui des récipients (1) possèdent une forme de tracé s'écartant du tracé en ligne droite de la rangée (27) respective.

7. Installation suivant l'une des revendications 5 à 6, **caractérisée en ce que** les espaces de logement sont décalés les uns par rapport aux autres pour des rangées (27) de récipients voisines de manière à former des intervalles (33) entre récipients, qui s'étendent perpendiculairement aux rangées (27) de récipients et qui s'étendent entre respectivement deux récipients (1) voisins des rangées (27) de récipients.

8. Installation suivant la revendication 7, **caractérisée en ce que** pour des récipients (1) dont la dimension dans la direction des rangées (27) de récipients ou des intervalles (33) entre récipients est plus grande que dans la direction qui y est perpendiculaire, les changements (31) de direction en pointe, diminuant la distance entre des parois voisines de type à entretoisement et les changements (31) de direction en pointe augmentant cette distance, sont chacun alignés entre eux.

9. Installation suivant l'une des revendications 5 à 8, **caractérisée en ce que**, pour des récipients (1) qui ont sur les côtés de leur dimension la plus grande respectivement une partie (19) de paroi en saillie, de section transversale triangulaire, faisant un angle (21) de cône, les parois (29) de type à entretoisement sont, aux changements (31) de direction augmentant la distance entre elles, coudées entre elles suivant un angle adapté à l'angle (21) du cône.

10. Installation suivant l'une des revendications 5 à 9, **caractérisée en ce que** les parois (29) de type à entretoisement sont formées d'une tôle d'acier inoxydable.

11. Installation suivant l'une des revendications 5 à 10, **caractérisée en ce que** les parois (29) de type à entretoisement s'étendent à partir d'une grille-support (23), formant le support des récipients (1), du cadre porteur, à un niveau qui correspond au moins au niveau de la partie (3) principale des récipients (1).

12. Installation suivant la revendication 11, **caractérisée en ce que** les extrémités des parois (29) de type à entretoisement sont reliées de chaque côté de la grille-support (23) par une paroi (25) plane de fermeture.

13. Installation suivant l'une des revendications 5 à 12, **caractérisée en ce que** des paires de parois (29) voisines de type à entretoisement constituent un tracé (35) d'arête, suivent, d' une façon donnant la forme, la paire de parois (37) frontales voisines du récipient (1) respectif en son point (15) de liaison respectif et/ou se stabilisent le long du tracé (35) d'arête, en ayant sa forme donnée à l'avance respective.
